# EUROPEAN PATENT SPECIFICATION

(11) **EP 3 138 296 B1**
(45) Date of publication and mention of the grant of the patent: **17.06.2020**
(21) Application number: 15727099.2
(22) Date of filing: 29.04.2015
(51) Int. Cl.: H04N 21/234, G11B 27/11, G11B 27/034, H04N 21/81, H04N 21/8547, G11B 27/28, G06F 16/783, H04N 21/43, H04N 21/41, G06F 16/583, G11B 27/10, H04N 21/233

(54) **DISPLAYING DATA ASSOCIATED WITH A PROGRAM BASED ON AUTOMATIC RECOGNITION**
ANZEIGE VON DATEN IM ZUSAMMENHANG MIT EINEM PROGRAMM AUF BASIS VON AUTOMATISCHER ERKENNUNG
AFFICHAGE DE DONNEES ASSOCIEES A UN PROGRAMME A BASE DE RECONNAISSANCE AUTOMATIQUE

(30) Priority: 30.04.2014 US 201461986611 P; 28.04.2015 US 201514698347
(43) Date of publication of application: 08.03.2017
(73) Proprietor: Netflix, Inc., Los Gatos, California 95032 (US)
(72) Inventor: KANSARA, Apurvakumar Dilipkumar, Los Gatos, California 95032 (US); GARCIA-SHELTON, Tussanee, Los Gatos, California 95032 (US); HUANG, Shihchi, Los Gatos, California 95032 (US); WU, Christine Suejane, Los Gatos, California 95032 (US)
(74) Representative: D Young & Co LLP
(86) International application number: PCT/US2015/028326
(87) International publication number: WO 2015/168309

(56) References cited:
- US-A1- 2003 107 592
- US-A1- 2009 288 112
- US-A1- 2010 175 083
- US-A1- 2011 247 042
- US-A1- 2011 247 044
- US-A1- 2011 311 095
- US-A1- 2011 320 627
- US-A1- 2013 014 155
- US-B1- 8 037 496

## Description

### FIELD OF THE DISCLOSURE

The present disclosure generally relates to computer-implemented audiovisual systems in which supplemental data is displayed on a computer as an audiovisual program plays. The disclosure relates more specifically to techniques for obtaining the supplemental data and synchronizing the display of the supplemental data as the audiovisual program plays.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Two-screen audiovisual experiences have recently appeared in which an individual can watch a movie, TV show or other audiovisual program on a first display unit, such as a digital TV, and control aspects of the experience such as channel selection, trick play functions, and audio level using a software application that runs on a separate computer, such as a portable computing device. However, if the user wishes to obtain information about aspects of the audiovisual program, such as background information on actors, locations, music and other content of the program, the user typically has no rapid or efficient mechanism to use. For example, separate internet searches with a browser are usually required, after which the user will need to scroll through search results to identify useful information. US 2011/0247042 discloses audio fingerprinting and other media matching technologies which can be used to identify broadcast media, such as television shows and radio broadcasts. US 2011/0320627 discloses apparatus, systems and methods for accessing and synchronizing the presentation of media content and supplemental media rich content. US 8037496 discloses a system and method to automatically generate content for ITV products and services by processing primary media sources. US 2013/014155 discloses a server generating metadata from content and several use cases to deliver content and metadata to main playback and second screen devices respectively. The synchronisation between content and metadata at the different devices is achieved by synchronising the delivery of the metadata to the playback time of the main playback device. US 2009/288112 discloses the transmission of timing information from a playback device to a second screen device.

### BRIEF DESCRIPTION OF THE DRAWINGS

FIG. 1 illustrates a networked computer system with which an embodiment may be used or implemented.
FIG. 2 illustrates a process of obtaining metadata.
FIG. 3A illustrates a process of playing an audiovisual program with concurrent display of metadata.
FIG. 3B illustrates an example metadata window displayed on a second screen device during playback of an audiovisual program on a first screen device.
FIG. 4A illustrates an example metadata window pertaining to a song.
FIG. 4B illustrates two adjoining metadata windows respectively pertaining to a song and an actor.
FIG. 5 illustrates an example metadata window pertaining to a location.
FIG. 6 illustrates a computer system with which an embodiment may be implemented.
FIG. 7, FIG. 8, FIG. 9, FIG. 10, FIG. 11, FIG. 12, FIG. 13, FIG. 14 illustrate specific example graphical user interface displays, metadata display panels, and related elements that could be used in one embodiment for displaying information relating to a particular movie, actor, location, and other information.

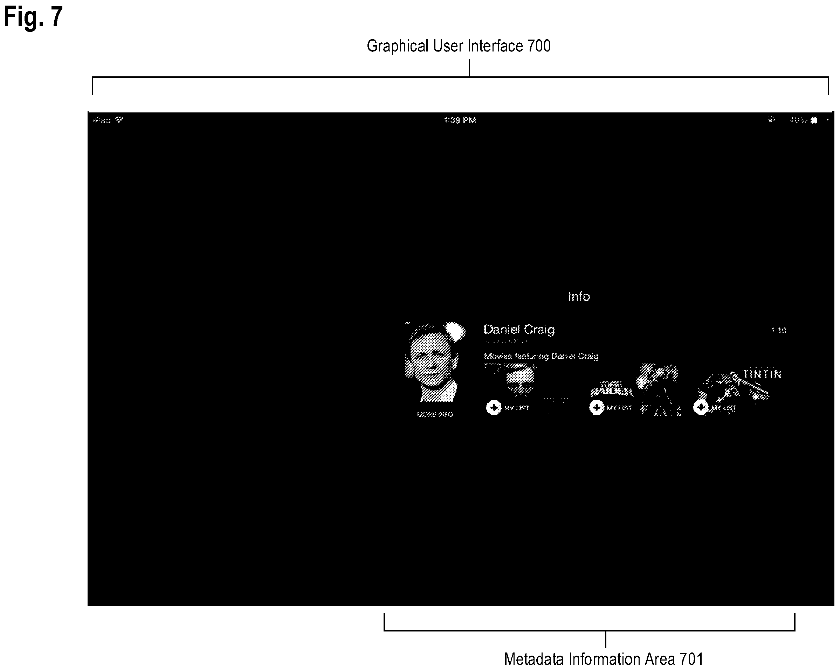

FIG. 7 illustrates a first view of an example graphical user interface according to an embodiment.

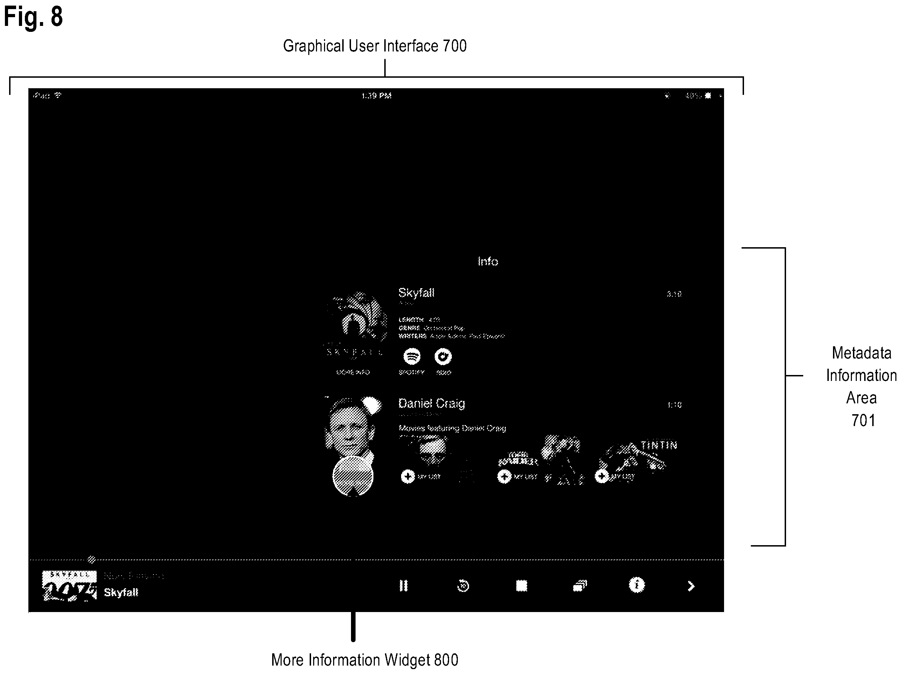

FIG. 8 illustrates a second view of an example graphical user interface according to an embodiment.

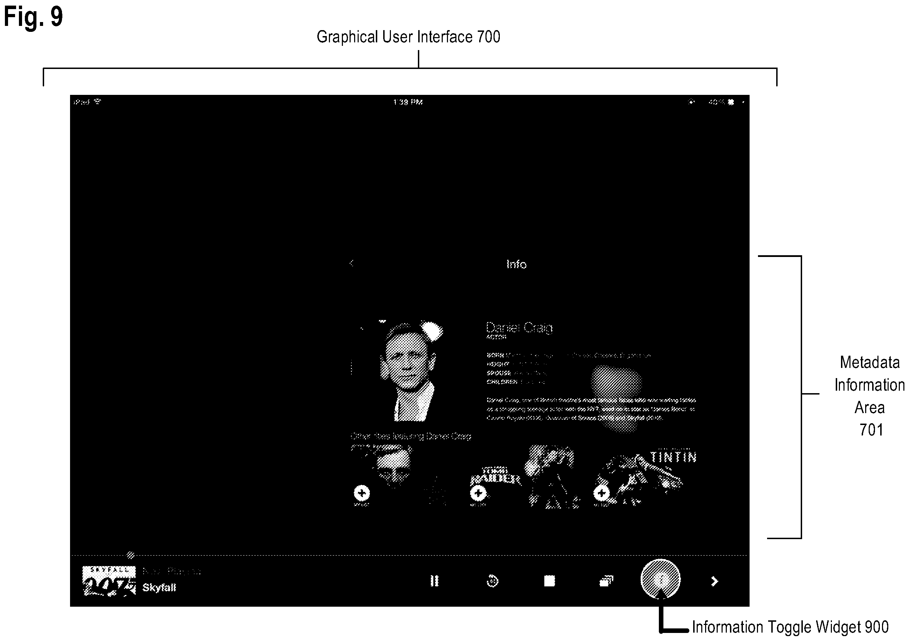

FIG. 9 illustrates a third view of an example graphical user interface according to an embodiment.

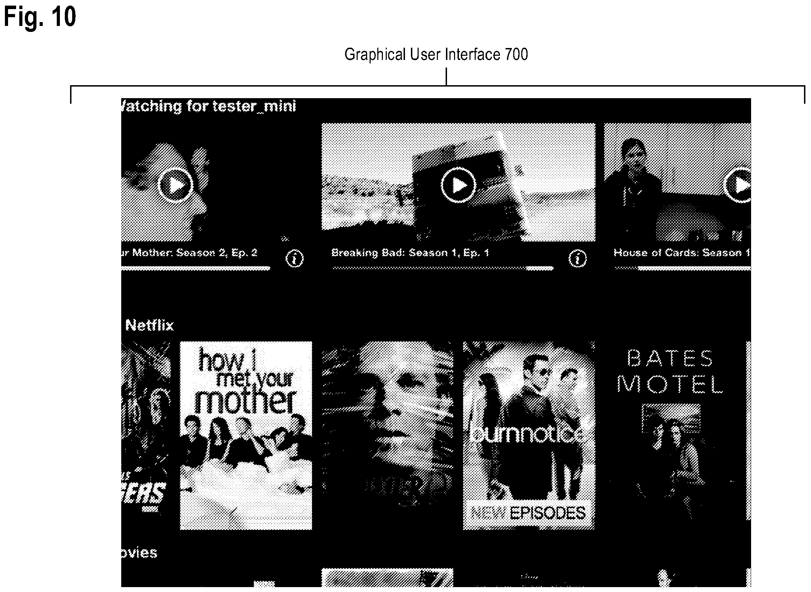

FIG. 10 illustrates a fourth view of an example graphical user interface according to an embodiment.

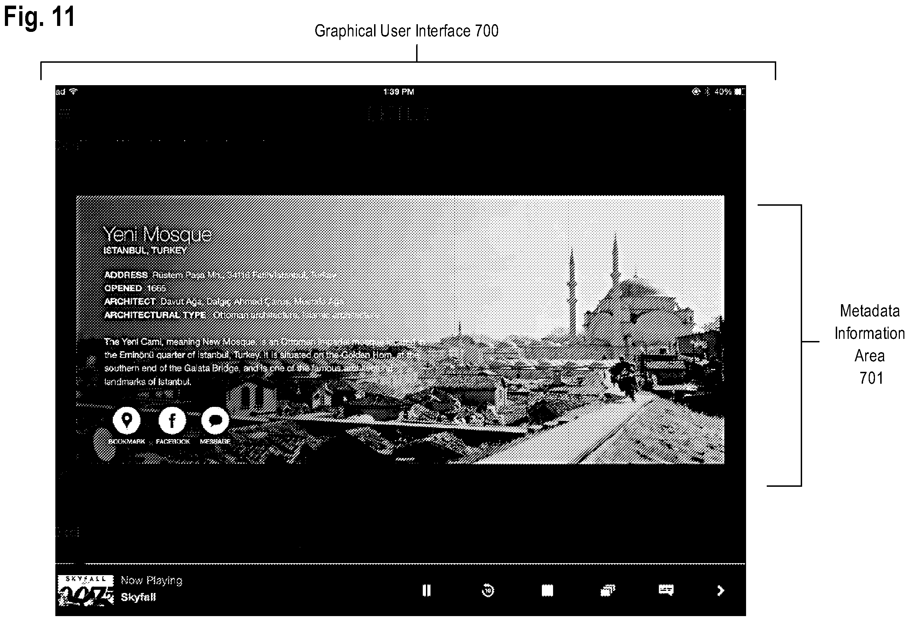

FIG. 11 illustrates a fifth view of an example graphical user interface according to an embodiment.

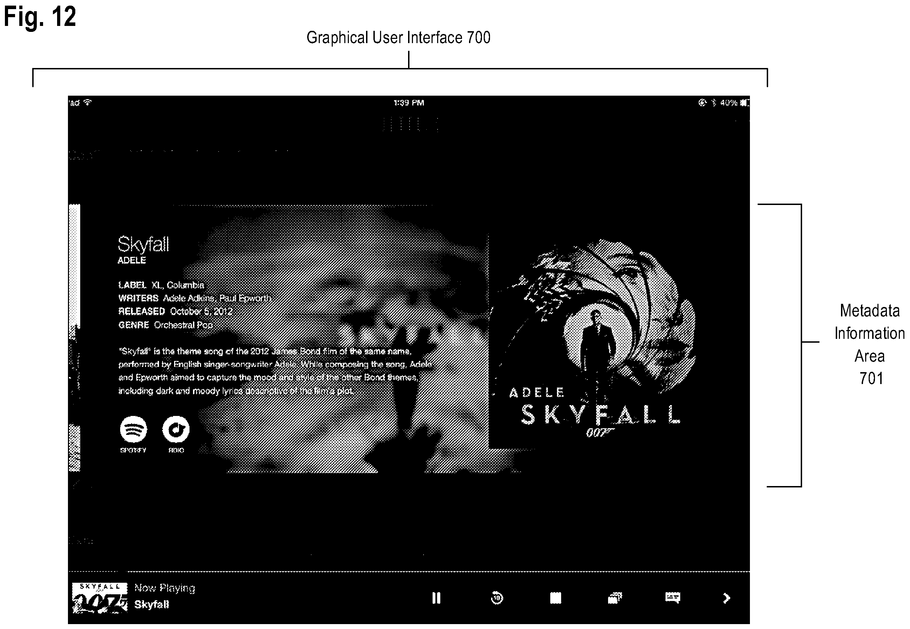

FIG. 12 illustrates a sixth view of an example graphical user interface according to an embodiment.

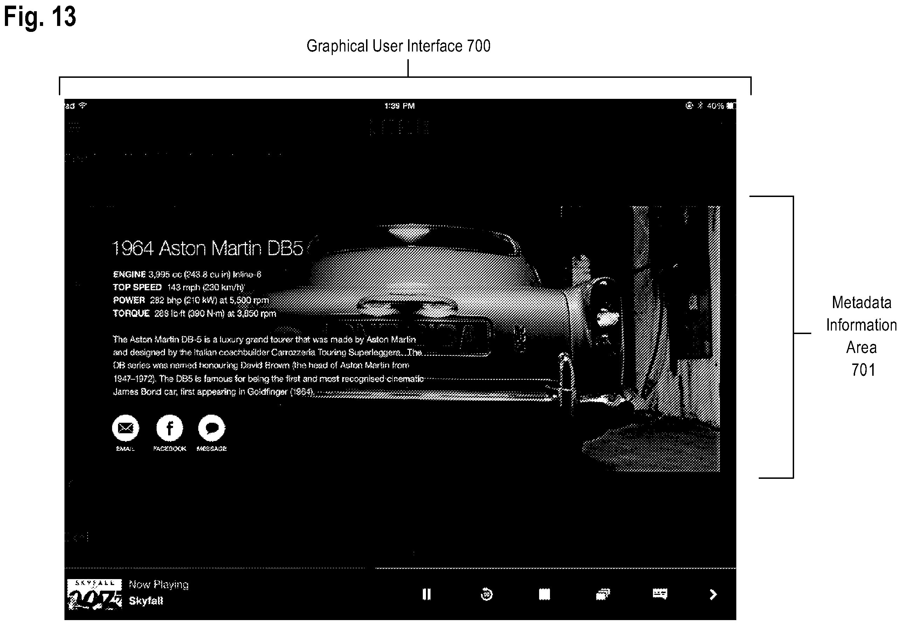

FIG. 13 illustrates a seventh view of an example graphical user interface according to an embodiment.

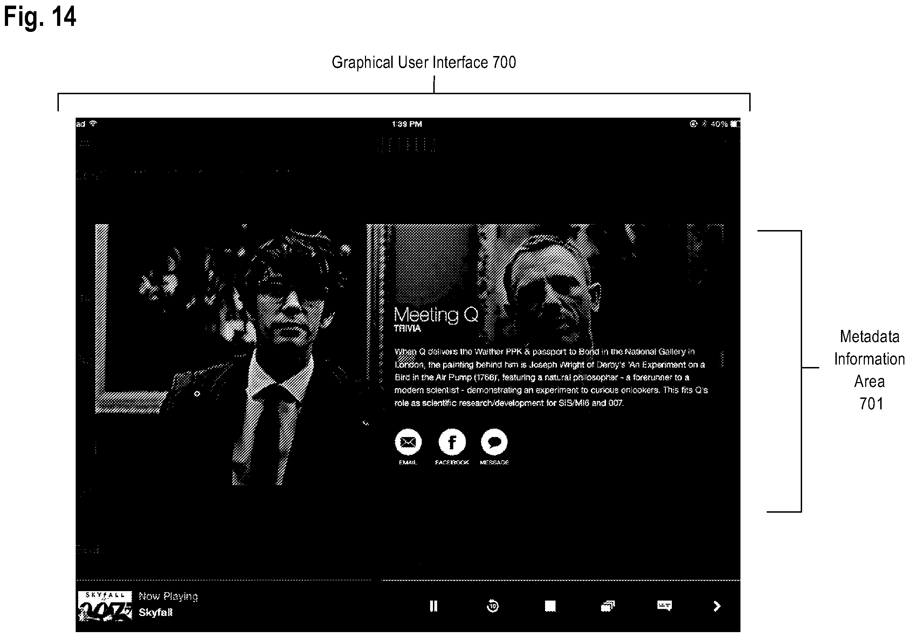

FIG. 14 illustrates an eighth view of an example graphical user interface according to an embodiment.

### DETAILED DESCRIPTION

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

The invention is set out in the appended claims.

### 1. GENERAL OVERVIEW

Techniques for automatically generating metadata relating to an audiovisual program, and concurrently presenting the information on a second-screen device while the audiovisual program is playing on a first-screen device, are disclosed. In some embodiments, a pre-processing phase involves applying automatic facial recognition, audio recognition, and /or object recognition to frames of a media item, optionally based upon a pre-prepared set of static images, to identify actors, music, locations, vehicles, and props or other items that are depicted in the program. Recognized data is used as the basis of queries to one or more external systems to obtain descriptive metadata about things that have been recognized in the program. The resulting metadata is stored in a database in association with time point values indicating when the recognized things appeared in the particular program. Thereafter, when an end user plays the same program using the first-screen device, the stored metadata is downloaded to a mobile computing device or other second-screen device of the end user. When playback reaches the same time point values, one or more windows, panels or other displays are formed on the second-screen device to display the metadata associated with those time point values. As a result, the user receives a view of the metadata on the second-screen device that is generally synchronized in time with the appearance on the first-screen device of the things that are represented in the metadata. In some embodiments, the second-screen device displays one or more dynamically modified display windows and/or sub panels that contain text, graphics and dynamically generated icons and hyperlinks based upon stored metadata relating to the program; the hyperlinks may be used to access or invoke external services or systems while automatically providing data to those services or systems that is based upon the metadata seen in the second-screen display.

### 2. STRUCTURAL AND FUNCTIONAL OVERVIEW

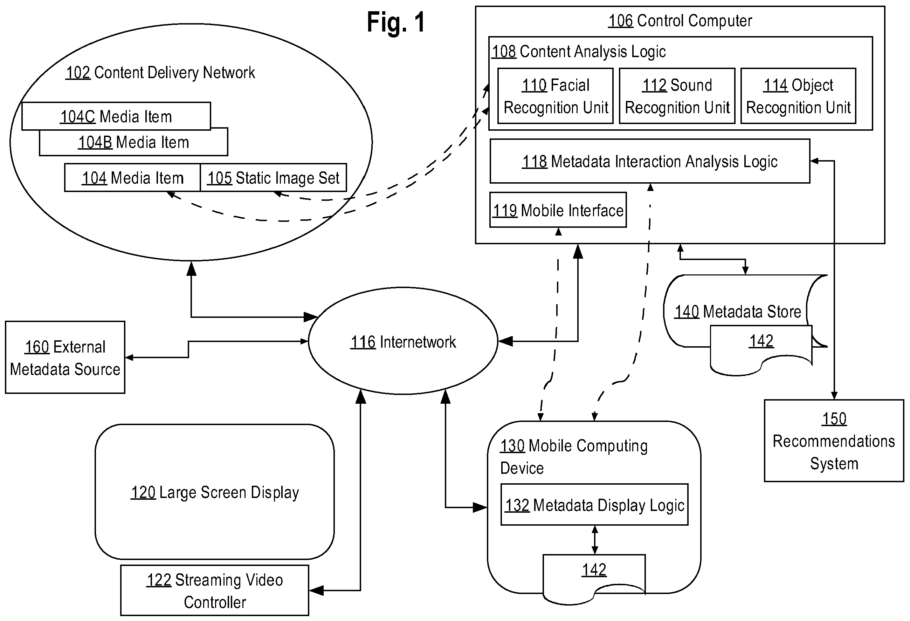

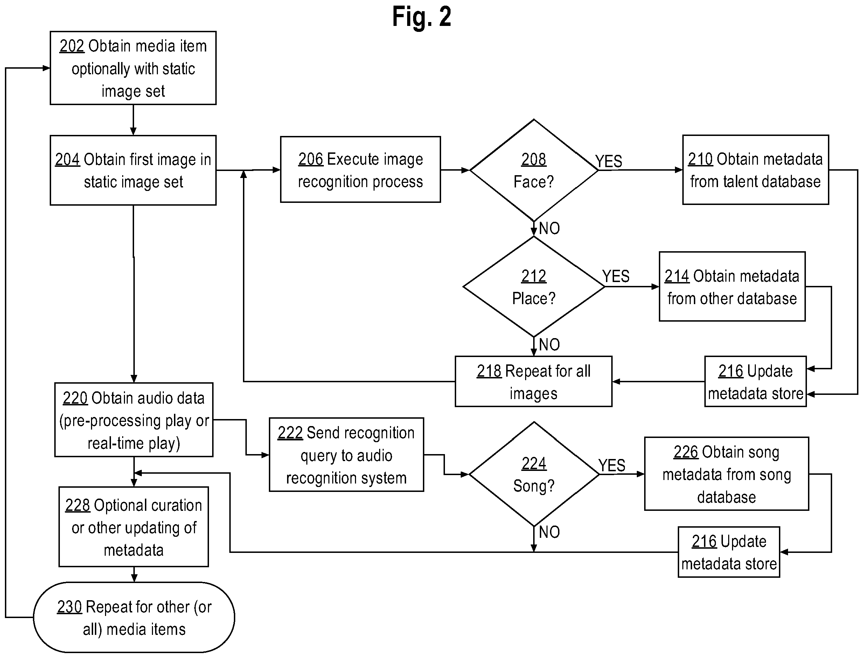

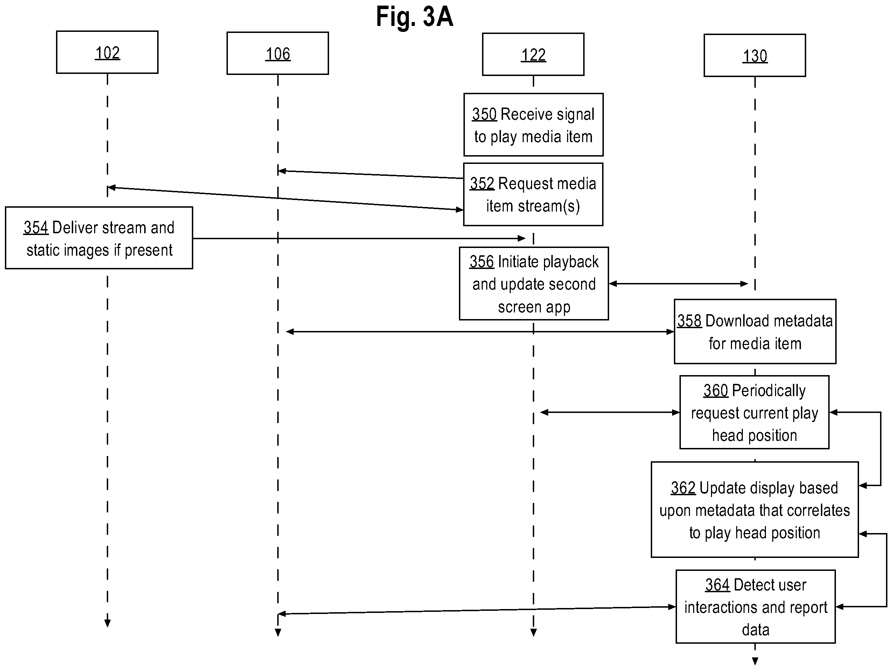

FIG. 1 illustrates a networked computer system with which an embodiment may be used or implemented. FIG. 2 illustrates a process of obtaining metadata. FIG. 3A illustrates a process of playing an audiovisual program with concurrent display of metadata. Referring first to FIG. 1, in an embodiment, a networked computer system that is usable for various embodiments generally comprises a control computer 106, a large screen display 120, and a mobile computing device 130, all of which may be communicatively coupled to one or more internetworks 116. A detailed description of each of the foregoing elements is provided in other sections herein. For purposes of illustrating a clear example, FIG. 1 shows a limited number of particular elements of the system but practical embodiments may, in many cases, include any number of particular elements such as media items, displays, mobile computing devices, etc.

In an embodiment, a content delivery network 102 (CDN 102) also is coupled to internetwork 116. In an embodiment, content delivery network 102 comprises a plurality of media items 104, 104B, 104C, each of which optionally may include or be associated with a static image set 105. Each of the media items 104, 104B, 104C comprises one or more sets of data for an audiovisual program such as a movie, TV show, or other program. For example, media item 104 may represent a plurality of digitally encoded files that are capable of communication in the form of streamed packetized data, at a plurality of bitrates, via internetwork 116 to a streaming video controller 122 associated with large screen display 120. Thus, media item 104 may broadly represent a plurality of different media files, encoded using different encoding algorithms or chips and/or for delivery at different bitrates and/or for display using different resolutions. There may be any number of media items 104, 104B, 104C in content delivery network 102 and embodiments specifically contemplate use with tens of thousands or more media items for streaming delivery to millions of users.

The static image set 105 comprises a set of static digital graphic images that are encoded, for example, using the JPEG standard. In one embodiment, static image set 105 comprises a set of thumbnail images that consist of JPEG frame grabs obtained at periodic intervals between the beginning and end of the associated media item 104. Images in the static image set 105 may be used, for example, to support trick play functions such as fast forward or rewind by displaying successive static images to simulate fast-forward or rewind of the associated media item 104. This description assumes familiarity with the disclosure of US patent publication 2009-0158326-A1.

Internetwork 116 broadly represents one or more local area networks, wide area networks, internetworks, the networks of internet service providers or cable TV companies, or a combination thereof using any of wired, wireless, terrestrial, satellite and/or microwave links.

Large screen display 120 may comprise a video display monitor or television. The large screen display 120 is coupled to receive analog or digital video output from a streaming video controller 122, which is coupled to internetwork 116. The streaming video controller 122 may be integrated with the large screen display 120 and the combination may comprise, for example, an internet-ready TV. Streaming video controller 122 comprises a special-purpose computer that is configured to send and receive data packets via internetwork 116 to the content delivery network 102 and control computer 106, and to send digital or analog output signals, and in some cases packetized data, to large screen display 120. Thus, the streaming video controller 122 provides an interface between the large screen display 120, the content delivery network 102, and the control computer 106. Examples of streaming video controller 122 include set-top boxes, dedicated streaming video boxes such as the Roku® player, etc.

Mobile computing device 130 is a computer that may comprise a laptop computer, tablet computer, netbook or ultrabook, smartphone, or other computer. In many embodiments, mobile computing device 130 includes a wireless network interface that may couple to internetwork 116 wirelessly and a battery-operated power supply to permit portable operation; however, mobility is not strictly required and some embodiments may interoperate with desktop computers or other computers that use wired networking and wired power supplies.

Typically mobile computing device 130 and large screen display 120 are used in the same local environment such as a home or office. In such an arrangement, large screen display 120 may be termed a first-screen device and the mobile computing device 130 may be termed a second-screen device, as both units have screen displays and may cooperate to provide an enriched audiovisual experience.

Control computer 106 may comprise a server-class computer or a virtual computing instance located in a shared data center or cloud computing environment, in various embodiments. In one embodiment, the control computer 106 is owned or operated by a service provider who provides a service associated with media items 104, 104B, 104C, such as a subscription-based media item rental or viewing service. However, in other embodiments the control computer 106 may be owned, operated and/or hosted by a party that does not directly offer such a service.

In an embodiment, control computer 106 comprises content analysis logic 108, metadata interaction analysis logic 118, and mobile interface 119, each of which may be implemented in various embodiments using one or more computer programs, other software elements, or digital logic. In an embodiment, content analysis logic 108 comprises a facial recognition unit 110, sound recognition unit 112, and object recognition unit 114.

Control computer 106 may be directly or indirectly coupled to one or more external metadata sources 160, to a metadata store 140 having a plurality of records 142, and a recommendations system 150, each of which is further described in other sections herein. In general, metadata store 140 comprises a database server, directory server or other data repository, implemented in a combination of software and hardware data storage units, that is configured to store information about the content of the media items 104, 104B, 104C such as records indicating actors, actresses, music or other sound content, locations or other place content, props or other things, food, merchandise or products, trivia, and other aspects of the content of the media items. Data in the metadata store 140 may serve as the basis of providing information to the metadata display logic 132 of the mobile computing device for presentation in graphical user interfaces or other formats during concurrent viewing of an audiovisual program on large screen display 120, as further described herein.

In an embodiment, the facial recognition unit 110 is configured to obtain the media items 104, 104B, 104C and optionally the static image set 105, perform facial recognition on the media items and/or static image set, and produce one or more metadata records 142 for storage in metadata store 140 representing data relating to persons who are identified in the media items and/or static image set identified via facial recognition. For example, facial recognition unit 110 may recognize data for a face of an adult male aged 50 years old in one of the images in static image set 105. In response, facial recognition unit 110 may send one or more queries via internetwork 116 to the one or more external metadata sources 160. The effect of the queries is to request the external metadata sources 160 to specify whether the facial recognition data correlates to an actor, actress, or other person who appears in the media item 104 or static image set 105. If so, the external metadata source 160 may return a data record containing information about the identified person, which the control computer 106 may store in metadata store 140 in a record 142. Examples of external metadata sources 160 include IMDB, SHAZAM (for use in audio detection as further described herein), and proprietary databases relating to motion pictures, TV shows, actors, locations and the like.

Facial recognition unit 110 may be configured to repeat the foregoing processing for all images in the static image set 105 and for all of the content of the media item 104 and/or all media items 104B, 104C. As a result, the metadata store 140 obtains data describing as many individuals as possible who are shown in or appear in the media items 104, 104B, 104C. The facial recognition unit 110 may be configured, alone or in combination with other aspects of content analysis logic 108, and based upon the metadata, to generate messages, data and/or user interface displays that can be provided to metadata display logic 132 of mobile computing device 130 for display to the user relating to people whom have been identified in the media items 104, 104B, 104C. Specific examples of user interface displays are described herein in other sections.

In an embodiment, the sound recognition unit 112 is configured to recognize songs, voices and/or other audio content from within one of the media items 104, 104B, 104C. For example, sound recognition unit 112 may be configured to use audio fingerprint techniques to detect patterns or bit sequences representing portions of sound in a played audio signal from a media item 104, and to query one of the external metadata sources 160 to match the detected patterns or bit sequences to records in a database of patterns or bit sequences. In an embodiment, programmatic calls to a service such as SHAZAM may be used as the queries. In response, sound recognition unit 112 obtains metadata identifying songs, voices and/or other audio content in the media item 104 and is configured to update record 142 in the metadata store 140 with the obtained metadata.

The sound recognition unit 112 may be configured, alone or in combination with other aspects of content analysis logic 108, and based upon the metadata, to generate messages, data and/or user interface displays that can be provided to metadata display logic 132 of mobile computing device 130 for display to the user relating to the sounds, voices or other audio content. Specific examples are described herein in other sections.

In an embodiment, the object recognition unit 114 is configured to recognize static images of places or things from within one of the media items 104, 104B, 104C. For example, object recognition unit 114 may be configured to use image fingerprint techniques to detect patterns or bit sequences representing portions of images in the static image set 105 or in a played video signal from a media item 104, and to query one of the external metadata sources 160 to match the detected patterns or bit sequences to records in a database of patterns or bit sequences. Image comparison and image matching services may be used, for example, to match the content of frames of the media item 104 or static image set 105 to similar images. In response, object recognition unit 114 obtains metadata identifying places or things in the media item 104 and is configured to update record 142 in the metadata store 140 with the obtained metadata. In such an arrangement, object recognition unit 114 may be configured to recognize locations in a movie or TV program, for example, based upon recognizable buildings, landscapes, or other image elements. In other embodiments the recognition may relate to cars, aircraft, watercraft or other vehicles, props, merchandise or products, food itemsetc.

The object recognition unit 114 may be configured, alone or in combination with other aspects of content analysis logic 108, and based upon the metadata, to generate messages, data and/or user interface displays that can be provided to metadata display logic 132 of mobile computing device 130 for display to the user relating to the places or things. Specific examples are described herein in other sections.

Referring now to FIG. 2, an example process for developing metadata based upon an audiovisual program is now described. At block 202, the process obtains a media item optionally with a static image set. For example, the process retrieves a stream for a first media item 104, 104B, or 104C from among the media items in the CDN. Alternatively the process of FIG. 2 may be used with media assets stored outside the CDN in working storage, temporary storage, or other areas rather than "live" versions that may be in the CDN. With block 230, a processing loop may be formed in which all media items are obtained and processed to identify and create metadata based upon the content of the media items.

At block 204, the process obtains a first image in a static image set, such as static image set 105 seen in FIG. 1. Blocks 206 to 218 inclusive represent an object recognition process; blocks 220 to 226 inclusive represent audio processing; and block 228 provides for optional curation or formation of manually entered metadata. Referring first to block 206, the process executes an object recognition process on the first image of the static image set; in various embodiments the object recognition process may be a facial recognition process, image similarity process, feature extraction process, or other method of determining the semantics of an image. The process may be directed to faces of people, locations, buildings, landscapes, objects, vehicles, or any other recognizable item in an audiovisual program that may result in useful metadata. Block 206 may represent parallel or serial execution of a plurality of different processes, algorithms or methods. Each execution may involve one or more such processes. For example, a first facial recognition algorithm may result in finding a face within an image and preparing a cropped copy of the image that is includes only the face, and a second algorithm may involve comparing the facial image to a library of other images of known actors, actresses or other figures, each of which is associated with a name, identifier, or other information about the party in the images.

At block 208, the process tests whether a face was recognized. If so, then at block 210 the process may obtain metadata from a talent database. For example, block 210 may involve programmatically sending queries to one of the external metadata sources 160 to request information about an actor or actress whose face has been recognized, based upon name or other identifier, and receiving one or more responses with metadata about the requested person. As an example, the IMDB database may be queries using parameterized URLs to obtain responsive data that specifies a filmography, biography, or other information about a particular person.

At block 216, the metadata store is updated with records that reflect the information that was received, optionally including facial or image data that was obtained as a result of blocks 206, 208. Block 216 also may include recording, in a metadata record in association with the information about a recognized person, timestamp or timecode data indicating a time position within the current media item 104, 104B, 104C at which the face or person was recognized. In this manner, the metadata store 140 may bind identifiers of a particular item 104, a particular time point of playback within that media item, a recognized person or face, and data about the recognized person or face for presentation on the second screen device as further described.

At block 212, the process tests whether a place has been recognized. If so, at block 214 the process obtains metadata about the recognized place from an external database. For example, a geographical database, encyclopedia service, or other external source may be used to obtain details such as latitude-longitude, history, nearby attractions, etc. At block 216, the metadata store is updated with the details.

Block 218 represents repeating the foregoing operations until all images in the static image set 105 have been processed. In some embodiments, the process of blocks 206 to 218 may be performed on the media items 104, 104B, 104C directly without processing separate static images. For example, the processes could be performed for key frames or other selected frames of an encoded data stream of the media items. In some cases, the facial recognition unit 110 may be trained on a reduced-size training set of images obtained from a specialized database. For example, all thumbnail images in the IMDB database, or another external source of images of actors, actresses or other individuals who appear in media items, could be used to train a facial recognizer to ensure good results when actual media items are processed that could contain images of the people in the training database.

At block 220, the process obtains audio data, for example from a play of one of the media items 104, 104B, 104C during a pre-processing stage, from subtitle data that is integrated with or supplied with the media items 104, 104B, 104C, or during real-time play of a stream of a user. In other words, because of the continuous nature of audio signals, in some embodiments the media items 104, 104B, 104C may be pre-processed by playing them for purposes of analysis rather than for delivery or causing display to subscribers or other users of a media item rental or playback service. In such internal pre-processing, each media item may be analyzed for the purpose of developing metadata. Playback can occur entirely in software or hardware without any actual output of audible sounds to anyone, but rather for the purpose of automatic algorithmic analysis of played data representing audio.

At block 222, a recognition query is sent to an audio recognition system. For example, data representing a segment of audio may be sent in a parameterized URL or other message to an external service, such as SHAZAM. The length of the segment is not critical provided it comprises sufficient data for the external service to perform recognition. Alternatively, when the source of music information is subtitle data, then the process may send queries to external metadata sources 160 based upon keywords or tags in the subtitle data without the need for performing recognition operations based upon audio data. If the subtitle data does not explicitly tag or identify song information, then keywords or other values in the subtitle data indicating songs may be identified using text analysis or semantic analysis of the subtitle data.

At block 224, the process tests whether the audio segment represents a song. If so, then at block 226 song metadata may be obtained from a song database, typically from one of the external metadata sources 160. Blocks 224, 226 may be performed for audio forms other than songs, including sound effects, voices, etc. Further, when audio or song information is obtained from subtitle data, then the test of block 224 may be unnecessary.

At block 216, the metadata store is updated with records indicating the name, nature, and location within the current media item 104, 104B, 104C at which the song or other audio was detected.

As indicated in block 228, metadata for a particular media item 104 also may be added to metadata store 140 manually or based upon selecting data from other sources ("curating") and adding records 142 for that data to the metadata store. In still other embodiments, crowd-sourcing techniques may be used in which users of external computer systems access a shared database of metadata about media items and contribute records of metadata based on personal observation, playback or other knowledge of the media items 104.

The preceding examples have addressed particular types of metadata that can be developed such as actors and locations, and specific examples of external services have been given. In other embodiments, any of many other types of metadata also may be developed from media items using similar techniques, and the data displays may be linked to other kinds of external services, including:
**Actor/Actress:** Height, Weight, Famous awards won, Other movies that are available to watch, Biography, Birthday.
**Location:** Interesting tourist sights/landmarks near that location; Imagery of that location, Summary/encyclopedic info about the history of that location, On a map, where is this location?, Saving the location to a map system, Saving the location to a travel website, Share the location on social media.
**Food:** Recipe website; Photos of the dish/food; Any story that is tied to the food's origin/history? Saving the name to a file; Share on social media.
**Music/Audio:** Add to a "listen later" queue in an external system; Any history of the album/song/artist?, Artist Name, Album tied to the song, Share on social media.
**Trivia:** Email; Share on social media.
**Merchandising:** If vehicle, statistical data; Glamour photography of product, and product being modeled; Logo associated with that product; Price; Materials/summary of that product's make & history; Share on social media.
**Director of Movie/Crew Info:** Biography, Stylistic distinction/influences, Awards, What other movies are available for the same director or crew, Add to a playing queue, Share on social media.

Referring now to FIG. 3A, message flows and operations that may be used when an end user plays one of the media items 104, 104B, 104C are now described. Reference numerals for units at the top of FIG. 3A correspond to functional units of FIG. 1, in this example.

At block 350, the streaming video controller 122 associated with the large screen display 120 receives a signal to play a media item. For example, an end user may use a remote control device to navigate a graphical user interface display, menu or other display of available media items 104, 104B, 104C shown on the large screen display 120 to signal the streaming video controller to select and play a particular movie, TV program or other audiovisual program. Assume, for purposes of describing a clear example, that media item 104 is selected. In some embodiments, the signal to play the media item is received from the mobile computing device 130.

At block 352, the streaming video controller 122 sends, to the control computer 106 and/or the CDN 102, a request for a media item digital video stream corresponding to the selected media item 104. In some embodiments, a first request is sent from the streaming video controller 122 to the control computer 106, which replies with an identifier of an available server in the CDN 102 that holds streaming data for the specified media item 104; the controller then sends a second request to the specified server in the CDN to request the stream. The specific messaging mechanism with which the streaming video controller 122 contacts the CDN 102 to obtain streaming data for a particular media item 104 is not critical and different formats, numbers and/or "rounds" of message communications may be used to ultimately result in requesting a stream.

At block 354, the CDN 102 delivers a digital video data stream for the specified media item 104 and, if present, the set of static images 105 for that media stream.

At block 356, the steaming video controller 122 initiates playback of the received stream, and updates a second-screen application, such as metadata display logic 132 of mobile computing device 130 or another application running on the mobile computing device, about the status of the play. Controller 122 may communicate with mobile computing device 130 over a LAN in which both the controller and mobile computing device participate, or the controller may send a message intended for the mobile computing device back to the control computer 106, which relays the message back over the networks to the mobile computing device. The particular protocol or messaging mechanism that steaming video controller 122 and mobile computing device 130 use to communicate is not critical. In one embodiment, messages use the DIAL protocol described in US Patent Publication No. 2014-0006474-A1. The ultimate functional result of block 356 is that the mobile computing device 130 obtains data indicating that a particular media item 104 has initiated playing on the large screen display 120 and, in some embodiments, the current time point at which the play head is located.

In some embodiments, updating the second-screen application occurs while the media item is in the middle of playback, rather than at the start of playback. For example, the mobile computing device 130 may initially be off and is then turned on at some point during playback. In some embodiments, if the media item is already playing at block 356, the streaming video controller 122 receives a request to sync from the mobile computing device 130. In response, the streaming video controller 122 sends metadata to the mobile computing device 130, such as information relating to the current time point of the playback of the particular media item 104. In such cases, block 358 is performed in response to receiving the metadata from the sync. In some embodiments, the sync request is sent by the mobile computing device 130 at block 356 even when the media item is at the start of playback to cause the streaming video controller 122 to update the mobile computing device 130.

In response to information indicating that a media item is playing, at block 358 the mobile computing device 130 downloads metadata relating to the media item 104. Block 358 may be performed immediately in response to the message of block 356, or after a time delay that ensures that the user is viewing a significant portion of the media item 104 and not merely previewing it. Block 358 may comprise the mobile computing device sending a parameterized URL or other communication to control computer 106 to request the metadata from metadata store 140 for the particular media item 104. In response, control computer 106 retrieves metadata from the metadata store 140 for the particular media item 104, packages the metadata appropriately in one or more responses, and sends the one or more responses to the mobile computing device 130. When the total amount of metadata for a particular media item 104 is large, compression techniques may be used at the control computer 106 and decompression may be performed at the mobile computing device 130.

In this approach, the mobile computing device 130 effectively downloads all metadata for a particular media item 104 when that media item starts playing. Alternatively, metadata could be downloaded in parts or segments using multiple rounds of messages at different periods. For example, if the total metadata associated with a particular media item 104 is large, then the mobile computing device 130 could download a first portion of the metadata relating to a first hour of a movie, then download a second portion of the metadata for the second hour of the movie only if the first hour is entirely played. Other scheduling or strategies may be used to manage downloading large data sets.

At block 360, the mobile computing device 130 periodically requests a current play head position for the media item 104 from the streaming video controller 122. For example, the Netflix DIAL protocol or another multi-device experience protocol may be used to issue such a request. Alternatively, in some embodiments the protocols may be implemented using automatic heartbeat message exchanges in which the streaming video controller 122 pushes or sends the current play head position, optionally with other data, to all devices that are listening for such a message to the protocols. Using any of these mechanisms, the result is that mobile computing device 130 obtains the current play head position.

In this context, a multi-device experience protocol may define messages that are capable of conveyance in HTTP payloads between the streaming video controller 122 and the mobile computing device 130 when both are present in the same LAN segment. In one example implementation, the multi-device experience protocol defines messages comprising name=value pair maps. Sub protocols for initially pairing co-located devices, and for session communication between devices that have been paired, may be defined. Each sub protocol may use version identifiers that are carried in messages to ensure that receiving devices are capable of interpreting and executing substantive aspects of the messages. Each sub protocol may define one or more message action types, specified as action=*value* in a message where the *value* is defined in a secure specification and defines validation rules that are applicable to the message; the validation rules may define a list of mandatory name=value pairs that must be present in a message, as well as permitted *value* types.

Further, the sub protocols may implement message replay prevention by requiring the presence of a nonce=*value* pair in every message, where the nonce value is generated by a sender. Thus, if a duplicate nonce is received, the receiver rejects the message. Further, error messages that specify a nonce that was never previously used in a non-error message may be rejected. In some embodiments, the nonce may be based upon a timestamp where the clocks of the paired devices are synchronized within a specified degree of precision, such as a few seconds. The sub protocols also may presume that each paired device has a unique device identifier that can be obtained in the pairing process and used in subsequent session messages.

At block 362, the display of the mobile computing device 130 is updated based upon metadata that correlates to the play head position. Block 362 broadly represents, for example, the metadata display logic 132 determining that the current play head position is close to or matches a time point that is reflected in the metadata for the media item 104 that was downloaded from the metadata store 140, obtaining the metadata that matches, and forming a display panel of any of a plurality of different types and causing displaying the panel on the screen of the mobile computing device. Examples of displays are described in the next section.

Blocks 360, 362 may be performed repeatedly any number of times as the media item 104 plays. As a result, the display of the mobile computing device 130 may be updated with different metadata displays periodically generally in synchronization with playing the media item 104 on the large screen display 120. In this manner, the displays on the mobile computing device 130 may dynamically enrich the experience of viewing an audiovisual program by providing related data on the second-screen device as the program is playing on the first-screen device.

Further, updating the display at block 362 is not necessarily done concurrently while the media item 104 is playing on the first-screen device. In some embodiments, block 362 may comprise obtaining metadata that is relevant to the current time position, but queuing or deferring the display of the metadata until the user enters an explicit request, or until playing the program ends. For example, metadata display logic 132 may implement a "do not distract" mode in which the display of the mobile computing device 130 is dimmed or turned off, and identification of relevant metadata occurs in the background as the program plays. At any time, the user may wake up the device, issue an express request to see metadata, and receive displays of one or more sub panels of relevant data for prior time points. In still another embodiment, an alert message containing an abbreviated set of the metadata for a particular time point is formed and sent using an alert feature of the operating system on which the mobile computing device 130 runs. With this arrangement, the lock screen of the mobile computing device 130 will show the alert messages from time to time during playback, but larger, brighter windows or sub panels are suppressed.

At block 364, the mobile computing device 130 detects one or more user interactions with the metadata or the displays of the metadata on the device, and reports data about the user interactions to metadata interaction analysis logic 118 at the control computer 106. For example, a user interaction may consist of closing a display panel, clicking through a link in a display panel to view related information in a browser, scrolling the display panel to view additional information, etc. User interactions may include touch gestures, selections of buttons, etc. Data representing the user interactions may be reported up to the control computer 106 for analysis at metadata interaction analysis logic 118 to determine patterns of user interest in metadata, which metadata was most viewed by users, and other information. In this manner, the metadata display logic 132 may enable the control computer 106 to receive data indicating what categories of information the user is attracted to or interacts with to the greatest extent; this input may be used to further personalize content that is suggested to the user using recommendations system 150, for example. Moreover, metadata display logic 132 and metadata interaction analysis logic 118 at control computer 106 may form a feedback loop by which the content shown at the mobile computing device 130 is filtered and made more meaningful by showing the kind of content that the user has previously interacted with while not showing sub panels or windows for metadata that was not interesting to the user in the past.

### 3. METADATA DISPLAY EXAMPLES

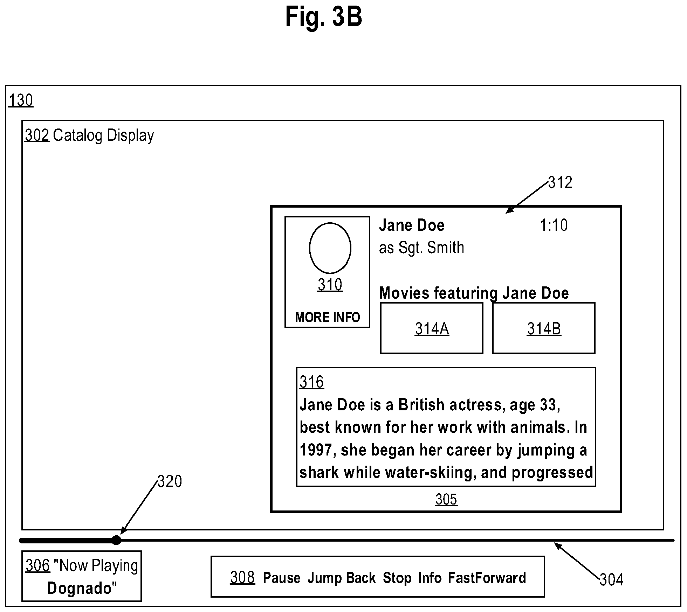

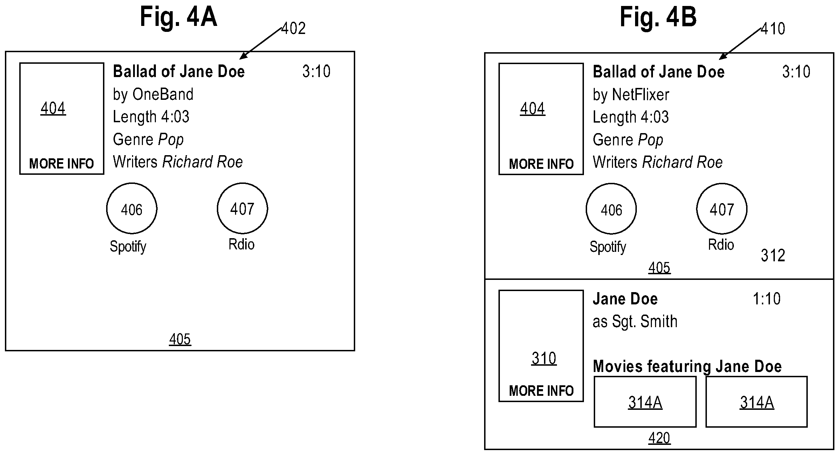

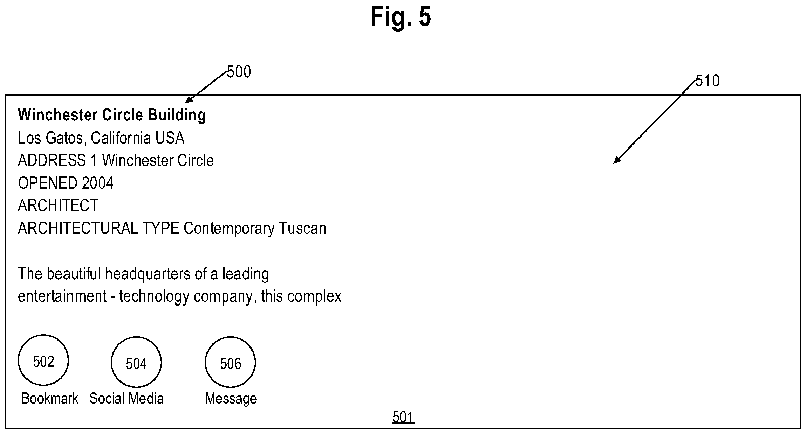

FIG. 3B illustrates an example metadata window displayed on a second screen device during playback of an audiovisual program on a first screen device. FIG. 4A illustrates an example metadata window pertaining to a song. FIG. 4B illustrates two adjoining metadata windows respectively pertaining to a song and an actor. FIG. 5 illustrates an example metadata window pertaining to a location. Referring first to FIG. 3B, in an embodiment, the mobile computing device 130 may have a touch-sensitive screen that initially displays a program catalog display 302, for example, a set of rows of box art, tiles or other representations of movies and TV programs. The particular content of catalog display 302 is not critical and other kinds of default views or displays may be used in other embodiments.

Mobile computing device 130 also displays a progress bar 304 that indicates relative amounts of the video that has been played and that remains unplayed, signified by line thickness, color and/or a play head indicator 320 that is located on the progress bar at a position proportional to the amount of the program that has been played. Mobile computing device 130 may also comprise a title indicator 306 that identifies the media item 104, 104B, 104C that is playing, and a set of trick play controls 308 that may signal functions such as video pause, jump back, stop, fast forward, obtain information, etc.

In an embodiment, when the time point represented by play head indicator 320 is at a point that matches or is near to the time value in the metadata for the media item 104 that has been downloaded, metadata display logic 132 is configured to cause displaying a sub panel 305, which may be superimposed over the catalog display 302 or displayed in a tiled or adjacent manner. For purposes of illustrating a clear example, FIG. 3B depicts a sub panel for an actress who appears in the media item 104 at the time position indicated by play head indicator 320. In this example, sub panel 305 comprises a thumbnail image 310 depicting the actress, and a data region 312 that displays basic data such as a name and character name. In an embodiment, sub panel 305 may comprise box art images 314A, 314B representing other movies or programs in which the same actress appears. The box art images 314A, 314B may be determined dynamically based upon querying a media item catalog or the recommendations system via the control computer 106 to obtain information about other movies or programs in which the same actor has appeared, and/or to obtain recommendations of other movies or programs that contain the same actor or that are similar to the current media item 104. In an embodiment, sub panel 305 may comprise a detail panel 316 that presents a biographical sketch or other metadata about the individual. In an embodiment, detail panel 316 is scrollable to enable viewing data that overflows the panel.

FIG. 4A depicts an example for a song that has been recognized in the media item 104 at the same time point. For example, a sub panel 405 may comprise a cover art region 404 with a thumbnail image of an album cover or other image associated with a particular song that is played in the media item at the time point. A data region 402 may comprise a song title, band or perform name, length value, genre value, indications of writers, etc. A plurality of icons 406, 407 with associated hyperlinks may be configured to provide access, via a browser hosted on the mobile computing device 130, to external services such as SPOTIFY, RDIO, etc. In an embodiment, the hyperlinks associated with icons 406, 407 are selectable by tapping, gesturing or otherwise indicating a selection of the icons, and are dynamically constructed each time that the sub panel 405 is instantiated and displays so that selection of the hyperlinks accesses related information at the external services. For example, selecting icon 406 causes initiating the SPOTIFY service to add the associated song to a user's list and/or to begin streaming download of music corresponding to the song shown in the sub panel 405, if available at the external service. Rather than generally invoking the external service, the icons 406, 407 are configured to encode and request a streaming play, or other data, of the specific song that is reflected in sub panel 405.

Icons 406, 407 also may facilitate sharing information contained in the sub panel 405 using social media services such as FACEBOOK, TWITTER, etc. Users often are reluctant to link these social media services to a media viewing service because exposure, in the social media networks, of particular movies or programs that the user watches may be viewed as releasing too much private information. However, social media postings that relate to songs identified in a movie, actors who are admired, locations that are interesting, and the like tend to involve less exposure of private information about watching habits or the subject matter of the underlying program. Thus, the use of icons 406, 407 to link aspects of metadata to social media accounts may facilitate greater discovery of media items 104, 104B, 104C by persons in the social networks without the release of complete viewing history information.

FIG. 4B illustrates an example in which the sub panel 405 of FIG. 4A is visually attached to a second sub panel 420 styled as a concatenated form of the sub panel 305 of FIG. 3B. A combined set of sub panels of this arrangement may be used where, for example, a particular scene in the media item 104 includes both the appearance of an actress and the playing of a song.

FIG. 5 illustrates an example for displaying data relating to a place or location. In this example, a sub panel 501 may comprise a data region 500 superimposed or displayed transparently over an image region 510, and a plurality of icons 502, 504, 506. In one embodiment, data region 500 displays data relating to an image of a location that has been identified in a movie such as name, address, historical data, architectural data, or other descriptive data. Image region 510 may comprise a frame grab from the media item 104 depicting the location, or another image of the same location that was obtained from one of the external metadata sources 160 and stored in the metadata record 142 for the location. In this arrangement, data of the data region 500 may be displayed over the image region 510 so that the corresponding location or place is visible below the text.

In an embodiment, icons 502, 504, 506 are configured with hyperlinks that are dynamically generated when the sub panel 501 is created and displayed. The hyperlinks are configured to link specific information from the data region 500 to forms, messages or queries in external services. For example, in an embodiment, selecting the bookmark icon 502 causes generating a map point for a map system, or generating a browser bookmark to an encyclopedia page, relating to the location shown in the data region 500. In an embodiment, selecting the social media icon 504 invokes an API of an external social media service to cause creating a posting in the social media that contains information about the specified location. In an embodiment, selecting the message icon 506 invokes a messaging application to cause creating a draft message that relates to the location or that includes a link to information about the location or reproduces data from data region 500. Other icons linked to other external services may be provided in other embodiments.

FIG. 7, FIG. 8, FIG. 9, FIG. 10, FIG. 11, FIG. 12, FIG. 13, FIG. 14 illustrate specific example graphical user interface displays, metadata display panels, and related elements that could be used in one embodiment for displaying information relating to a particular movie, actor, location, and other information. In various embodiments, sub panels may relate to merchandise, trivia, food, and other items associated with the current media item 104. Icons with associated hyperlinks may vary according to the subject matter or type of the sub panel. For example, in the example above, icons with hyperlinks were configured to access music-oriented services. When the subject matter of the sub panel is food, then the icons and hyperlinks may be configured to access recipes or to tie in to cooking sites on the internet. Trivia sub panels may be configured to generate email, social media postings, or messages that summarize the trivia or contain links to related information.

FIG. 7 illustrates a first view of an example graphical user interface 700 according to an embodiment. In FIG. 7, the graphical user interface 700 is displayed by the metadata display logic 132 of the mobile computing device 130 in response to determining that playback of the media item presented by the streaming video controller 122 is within a threshold distance of the timecode associated with the displayed content item(s). In this example, the metadata information area 701 displays information related to an actor featuring in the media item, such as the actor's name, an image of the actor, other media items featuring the actor, and screen caps for the other media items. In some embodiments, the content items related to the actor displayed in the metadata information area 701 are a result of the facial recognition unit 110 of the control computer 106 processing the media item or data related to the media item (such as static image data), identifying faces within the media item, identifying the actor by comparing the faces to a database of faces of known actors, and discovering metadata related to the identified actor.

FIG. 8 illustrates a second view the example graphical user interface 700 that highlights a more information widget 800 according to an embodiment. In an embodiment, when the more information widget 800 is selected, the mobile computing device 130 updates the metadata information area 701 to display additional information related to the person, place, or thing associated with the more information widget 800. In some embodiments, the metadata information area 701 contains multiple instances of the more information widget 800, each associated with a different person, place, or thing. For example, each person, place, or thing with content items corresponding to the current timecode of the media item may be displayed in a sub-area (such as a column or row) of the metadata information area 701 with a corresponding more information widget 800 being displayed in close proximity to the sub-area or within the sub-area.

FIG. 9 illustrates a third view of the graphical user interface 700 in which the more information widget 800 has been selected according to an embodiment. In FIG. 9, the metadata information area 701 is extended to include information related to the actor, such as place of birth, height, spouse, children, and summary that were not displayed in FIG. 8. FIG. 9 also highlights an information toggle widget 900 which, when selected, causes the metadata information area 701 to toggle between a hidden mode and a displayed mode. When the metadata information area 701 is in display mode, the mobile computing device 130 displays the metadata information area 701 within the graphical user interface 700. However, when the metadata information area 701 is in hidden mode, the graphical user interface 700 is displayed without rendering the metadata information area 701. FIG. 10 illustrates a fourth view of the graphical user interface 700 representing the case where the metadata information area 701 is in hidden mode and not currently being displayed by the mobile computing device 130.

FIG. 11 illustrates a fifth view of the graphical user interface 700 where the metadata information area 701 displays information related to a place according to an embodiment. In an embodiment, the metadata information area 701 displays the content item(s) related to the place in response to the playback of the media item by the streaming video controller 122 reaching or being within a threshold distance of a timecode associated with the content item or items related to the place. In some embodiments, the content items related to the place displayed in the metadata information area 701 are a result of the object recognition unit 114 of the control computer 106 processing the media item or data related to the media item (such as static image data), identifying portions of images within the media item, identifying a place by comparing the image portions to a database of known places, and discovering metadata related to the identified place. For example, in FIG. 11, the metadata information area 701 displays information related to the place, such as the name of the place, location of the place, history information of the place, summary information of the place, architect of the place, architectural style of the place, a link to bookmark the place, a link to post information related to the place to a social media site, and a link to message information related to the place.

FIG. 12 illustrates a sixth view of the graphical user interface 700 where the metadata information area 701 displays information related to a music track according to an embodiment. In an embodiment, the metadata information area 701 displays the content item(s) related to the music track in response to the playback of the media item by the streaming video controller 122 reaching or being within a threshold distance of a timecode associated with the content item or items related to the place. In some embodiments, the content items related to the music track are displayed in the metadata information area 701 are a result of the sound recognition unit 112 detecting patterns of bits within the audio data, identifying the music track by comparing those bits to a database of patterns of known music tracks, and discovering metadata associated with the identified music track. For example, in FIG. 12, the metadata information area 701 includes information such as the name of the music track, artist who produced the track, writers of the track, genre of the track, label of the track, summary of the track, and links to the track on external sources.

FIG. 13 illustrates a seventh view of the graphical user interface 700 where the metadata information area 701 displays information related to an automobile according to an embodiment. In an embodiment, the metadata information area 701 displays the content item(s) related to the automobile in response to the playback of the media item by the streaming video controller 122 reaching or being within a threshold distance of a timecode associated with the content item or items related to the automobile. In some embodiments, the content items related to the place displayed in the metadata information area 701 are a result of the object recognition unit 114 of the control computer 106 processing the media item or data related to the media item (such as static image data), identifying portions of images within the media item, identifying an automobile by comparing the image portions to a database of known automobiles, and discovering metadata related to the identified automobile. For example, in FIG. 13, the metadata information area 701 displays information related to the automobile, such as the model of the automobile, engine of the automobile, top speed of the automobile, power of the automobile, torque of the automobile, summary of the automobile, a link to email information related to the automobile, a link to post information related to the automobile to social media, and a link to message information related to the automobile.

FIG. 14 illustrates an eighth view of the graphical user interface 700 were the metadata information area 701 displays information related to an item according to an embodiment. In an embodiment, the metadata information area 701 displays the content item(s) related to the item in response to the playback of the media item by the streaming video controller 122 reaching or being within a threshold distance of a timecode associated with the content item or items related to the item. In some embodiments, the content items related to the item displayed in the metadata information area 701 are a result of the object recognition unit 114 of the control computer 106 processing the media item or data related to the media item (such as static image data), identifying portions of images within the media item, identifying an item by comparing the image portions to a database of known items, and discovering metadata related to the identified automobile. For example, in FIG. 13, the metadata information area 701 displays trivia related to the item, a link to email information related to the item, a link to post information related to the item to social media, and a link to message information related to the item.

### 4. IMPLEMENTATION EXAMPLE-HARDWARE OVERVIEW

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

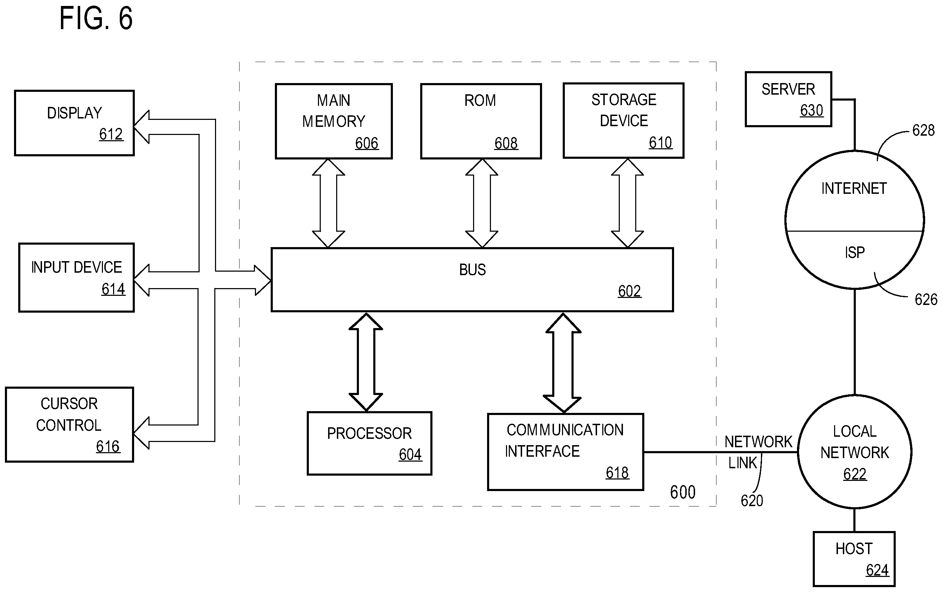

For example, FIG. 6 is a block diagram that illustrates a computer system 600 upon which an embodiment of the invention may be implemented. Computer system 600 includes a bus 602 or other communication mechanism for communicating information, and a hardware processor 604 coupled with bus 602 for processing information. Hardware processor 604 may be, for example, a general purpose microprocessor.

Computer system 600 also includes a main memory 606, such as a random access memory (RAM) or other dynamic storage device, coupled to bus 602 for storing information and instructions to be executed by processor 604. Main memory 606 also may be used for storing temporary variables or other intermediate information during execution of instructions to be executed by processor 604. Such instructions, when stored in non-transitory storage media accessible to processor 604, render computer system 600 into a special-purpose machine that is customized to perform the operations specified in the instructions.

Computer system 600 further includes a read only memory (ROM) 608 or other static storage device coupled to bus 602 for storing static information and instructions for processor 604. A storage device 610, such as a magnetic disk or optical disk, is provided and coupled to bus 602 for storing information and instructions.

Computer system 600 may be coupled via bus 602 to a display 612, such as a cathode ray tube (CRT), for displaying information to a computer user. An input device 614, including alphanumeric and other keys, is coupled to bus 602 for communicating information and command selections to processor 604. Another type of user input device is cursor control 616, such as a mouse, a trackball, or cursor direction keys for communicating direction information and command selections to processor 604 and for controlling cursor movement on display 612. This input device typically has two degrees of freedom in two axes, a first axis (e.g., x) and a second axis (e.g., y), that allows the device to specify positions in a plane.

Computer system 600 may implement the techniques described herein using customized hard-wired logic, one or more ASICs or FPGAs, firmware and/or program logic which in combination with the computer system causes or programs computer system 600 to be a special-purpose machine. According to one embodiment, the techniques herein are performed by computer system 600 in response to processor 604 executing one or more sequences of one or more instructions contained in main memory 606. Such instructions may be read into main memory 606 from another storage medium, such as storage device 610. Execution of the sequences of instructions contained in main memory 606 causes processor 604 to perform the process steps described herein. In alternative embodiments, hard-wired circuitry may be used in place of or in combination with software instructions.

The term "storage media" as used herein refers to any non-transitory media that store data and/or instructions that cause a machine to operation in a specific fashion. Such storage media may comprise non-volatile media and/or volatile media. Non-volatile media includes, for example, optical or magnetic disks, such as storage device 610. Volatile media includes dynamic memory, such as main memory 606. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 602. Transmission media can also take the form of acoustic or light waves, such as those generated during radio-wave and infra-red data communications.

Various forms of media may be involved in carrying one or more sequences of one or more instructions to processor 604 for execution. For example, the instructions may initially be carried on a magnetic disk or solid state drive of a remote computer. The remote computer can load the instructions into its dynamic memory and send the instructions over a telephone line using a modem. A modem local to computer system 600 can receive the data on the telephone line and use an infra-red transmitter to convert the data to an infra-red signal. An infra-red detector can receive the data carried in the infra-red signal and appropriate circuitry can place the data on bus 602. Bus 602 carries the data to main memory 606, from which processor 604 retrieves and executes the instructions. The instructions received by main memory 606 may optionally be stored on storage device 610 either before or after execution by processor 604.

Computer system 600 also includes a communication interface 618 coupled to bus 602. Communication interface 618 provides a two-way data communication coupling to a network link 620 that is connected to a local network 622. For example, communication interface 618 may be an integrated services digital network (ISDN) card, cable modem, satellite modem, or a modem to provide a data communication connection to a corresponding type of telephone line. As another example, communication interface 618 may be a local area network (LAN) card to provide a data communication connection to a compatible LAN. Wireless links may also be implemented. In any such implementation, communication interface 618 sends and receives electrical, electromagnetic or optical signals that carry digital data streams representing various types of information.

Network link 620 typically provides data communication through one or more networks to other data devices. For example, network link 620 may provide a connection through local network 622 to a host computer 624 or to data equipment operated by an Internet Service Provider (ISP) 626. ISP 626 in turn provides data communication services through the world wide packet data communication network now commonly referred to as the "Internet" 628. Local network 622 and Internet 628 both use electrical, electromagnetic or optical signals that carry digital data streams. The signals through the various networks and the signals on network link 620 and through communication interface 618, which carry the digital data to and from computer system 600, are example forms of transmission media.

Computer system 600 can send messages and receive data, including program code, through the network(s), network link 620 and communication interface 618. In the Internet example, a server 630 might transmit a requested code for an application program through Internet 628, ISP 626, local network 622 and communication interface 618.

The received code may be executed by processor 604 as it is received, and/or stored in storage device 610, or other non-volatile storage for later execution.

## Claims

1. A method comprising:
receiving, at a control computer (106), media data for a particular media item (104);
analyzing, by the control computer, the media data to identify one or more content items related to the particular media item, wherein each content item of the one or more content items is associated with a respective time position in the particular media item, wherein the one or more content items represent metadata associated with the particular media item;
sending, from a media controller computer (122) to the control computer, a request for the particular media item;
receiving, at the control computer, the request for the particular media item;
in response to receiving the request for the particular media item, the control computer causing the particular media item to be delivered to the media controller computer, wherein the media controller computer is configured to cause playback of the particular media item and send an indication that playback of the particular media item has commenced to a second screen computer (130) that is communicatively coupled to the media controller computer;
sending, by the second screen computer to the control computer, a request for the metadata associated with the particular media item;
receiving, at the control computer, the request for the metadata associated with the particular media item;
sending, by the control computer to the second screen computer, at least a portion of the one or more content items and the respective time position associated with each content item of the portion of the one or more content items,
sending, by the media controller computer, periodically and automatically to the second screen computer, a current play head position into the playback of the particular media item,
receiving, at the second screen computer, the current play head position into the playback of the particular media item from the media controller computer and in response to determining that the current play head position is at or near the respective time position of a particular content item of the portion of the one or more content items, display the particular content item.

2. The method of Claim 1, wherein the media data for the particular media item includes one or more of: video data, audio data, subtitle data, or static image data.

3. The method of Claim 1 or Claim 2, wherein the second screen computer is a mobile computing device and the media controller computer is configured to control streaming of the content item to a large screen display device.

4. The method of any one of the preceding Claims, wherein analyzing the media data comprises:
applying a facial recognition process to the media data to identify one or more face images displayed in the particular media item;
comparing, for each face image of the one or more faces images, the face image to a library of stored face images to identify a particular stored face image that matches the face image;
identifying, for each face image of the one or more face images, one or more content items associated with the particular face image that matches the face image.

5. The method of Claim 4, wherein the one or more content items associated with the particular face image include one or more of: a height value, a weight value, awards won, other media items, biography information, birth date, a link which when selected causes a message containing information related to the particular face image to be sent, a link which when selected causes the information related to the particular face image to be posted to social media, or a link which when selected causes the information related to the particular face image to be emailed.

6. The method of any one of Claims 1-5, wherein analyzing the media data comprises:
applying audio fingerprinting to the media data to identify one or more patterns of sound;
querying one or more data sources to match the one or more patterns of sound to one or more audio content items;
identifying, for each audio content item of the one or more audio content items, one or more content items associated with the audio content item.

7. The method of Claim 6, wherein at least one of the one or more data sources is external to the control computer.

8. The method of Claim 6, wherein each audio content item of the one or more audio content items is a name of a song, history of the song, album of the song, or a link to a service from which the song can be obtained.

9. The method of any one of Claims 1-8, wherein analyzing the media data comprises:
applying image fingerprinting to the media data to identify one or more patterns representing portions of images in the media data;
querying one or more data sources to match the one or more patterns to places or things displayed in the particular media item;
identifying one or more content items based on the places or the things matching the one or more patterns.

10. The method of Claim 9, wherein the one or more content items include one or more of: landmarks of a place, imagery of the place, history of the place, map data indicating a location of the place, travel information for the place, one or more images of food displayed in the particular media item, history information of the food, statistical data of vehicles displayed in the particular media item, images of a product displayed in the particular media item, logos associated with the product, price of the product, materials of the product, summary of the product, make of the product, history of the product, a link which when selected causes information related to an item to be messaged, a link which when selected causes information related to an item to be posted to social media, or a link which when selected causes information related to the item to be emailed.

11. A non-transitory computer-readable storage medium (610) storing one or more instructions which, when executed by one or more processors, cause the one or more processors to perform the method of any one of the preceding Claims.

12. A system (600) comprising:
a control computer (106);
a media controller computer (122); and
a second screen computer (130) communicatively coupled to the media controller computer;
wherein the control computer is configured to:
receive media data for a particular media item (104);
analyze the media data to identify one or more content items related to the particular media item, wherein each content item of the one or more content items is associated with a respective time position in the particular media item, wherein the one or more content items represent metadata associated with the particular media item;
the media controller computer is configured to send, to the control computer, a request for the particular media item,
wherein the control computer is configured to receive the request for the particular media item and, in response to receiving the request for the particular media item, deliver the particular media item to the media controller computer, wherein the media controller computer is configured to cause playback of the particular media item and send an indication that playback of the particular media item has commenced to the second screen computer;
the second screen computer is configured to send, to the control computer, a request for the metadata associated with the particular media item;
the control computer is configured to receive the request for the metadata associated with the particular media item and send, to the second screen computer, at least a portion of the one or more content items and the respective time position associated with each content item of the portion of the one or more content items,
wherein the media controller computer is configured to periodically and automatically send, to the second screen computer, a current play head position into the playback of the particular media item,
wherein the second screen computer is configured to receive the current play head position into the playback of the particular media item from the media controller computer and in response to determining that the current play head position is at or near the respective time position of a particular content item of the portion of the one or more content items, display the particular content item.

## Patentansprüche

1. Verfahren, Folgendes umfassend:
Empfangen, an einem Steuercomputer (106), von Mediendaten für ein bestimmtes Medienelement (104);
Analysieren, durch den Steuercomputer, der Mediendaten, um ein oder mehrere Inhaltselemente zu identifizieren, die das bestimmte Medienelement betreffen, wobei jedes Inhaltselement des einen oder der mehreren Inhaltselemente einer jeweiligen Zeitposition in dem bestimmten Medienelement zugeordnet ist, wobei das eine oder die mehreren Inhaltselemente Metadaten repräsentieren, die dem bestimmten Medienelement zugeordnet sind;
Senden, aus einem Mediensteuerungscomputer (122) an den Steuercomputer, einer Anfrage nach dem bestimmten Medienelement;
Empfangen, an dem Steuercomputer, der Anfrage nach dem bestimmten Medienelement;
als Reaktion auf Empfangen der Anfrage nach dem bestimmten Medienelement, Bewirken durch den Steuercomputer, dass das bestimmte Medienelement an den Mediensteuerungscomputer geliefert wird, wobei der Mediensteuerungscomputer eingerichtet ist, um eine Wiedergabe des bestimmten Medienelements zu bewirken und eine Angabe zu senden, dass eine Wiedergabe des bestimmten Medienelements an einem zweiten Bildschirmcomputer (130) begonnen hat, der kommunikativ mit dem Mediensteuerungscomputer gekoppelt ist;
Senden, durch den zweiten Bildschirmcomputer an den Steuercomputer, einer Anfrage nach den Metadaten, die dem bestimmten Medienelement zugeordnet sind;
Empfangen, an dem Steuercomputer, der Anfrage nach den Metadaten, die dem bestimmten Medienelement zugeordnet sind;
Senden, durch den Steuercomputer an den zweiten Bildschirmcomputer, mindestens eines Abschnitts des einen oder der mehreren Inhaltselemente und der jeweiligen Zeitposition, die jedem Inhaltselement des Abschnitts des einen oder der mehreren Inhaltselemente zugeordnet ist,
Senden, durch den Mediensteuerungscomputer, periodisch und automatisch an den zweiten Bildschirmcomputer, einer aktuellen Abspielkopfposition in der Wiedergabe des bestimmten Medienelements,
Empfangen, an dem zweiten Bildschirmcomputer, der aktuellen Abspielkopfposition in der Wiedergabe des bestimmten Medienelements aus dem Mediensteuerungscomputer und als Reaktion auf ein Bestimmen, dass die aktuelle Abspielkopfposition auf oder nahe der jeweiligen Zeitposition eines bestimmten Inhaltselements des Abschnitts des einen oder der mehreren Inhaltselemente ist, Anzeigen des bestimmten Inhaltselements.

2. Verfahren nach Anspruch 1, wobei die Mediendaten für das bestimmte Medienelement mindestens Videodaten, Audiodaten, Untertiteldaten oder Stehbilddaten umfassen.

3. Verfahren nach Anspruch 1 oder 2, wobei der zweite Bildschirmcomputer eine mobile Computervorrichtung ist und der Mediensteuerungscomputer eingerichtet ist, um ein Streaming des Inhaltselements auf eine große Bildschirmanzeigevorrichtung zu steuern.

4. Verfahren nach einem der vorhergehenden Ansprüche, wobei Analysieren der Mediendaten Folgendes umfasst:
Anwenden eines Gesichtserkennungsprozesses auf die Mediendaten, um ein oder mehrere Gesichtsbilder zu identifizieren, die in dem bestimmten Medienelement angezeigt werden;
Vergleichen, für jedes Gesichtsbild des einen oder der mehreren Gesichtsbilder, des Gesichtsbilds mit einer Bibliothek gespeicherter Gesichtsbilder, um ein bestimmtes gespeichertes Gesichtsbild zu identifizieren, das mit dem Gesichtsbild übereinstimmt;
Identifizieren, für jedes Gesichtsbild des einen oder der mehreren Gesichtsbilder, eines oder mehrerer Inhaltselemente, die dem bestimmten Gesichtsbild zugeordnet sind, das mit dem Gesichtsbild übereinstimmt.

5. Verfahren nach Anspruch 4, wobei das eine oder die mehreren Inhaltselemente, die dem bestimmten Gesichtsbild zugeordnet sind, mindestens eines der folgenden Elemente umfassen: einen Höhenwert, einen Gewichtswert, verliehene Auszeichnungen, andere Medienelemente, biographische Informationen, Geburtsdatum, eine Verknüpfung, die, wenn sie angewählt wird, bewirkt, dass eine Nachricht, die Informationen enthält, die das bestimmte Gesichtsbild betreffen, gesendet wird, eine Verknüpfung, die, wenn sie angewählt wird, bewirkt, dass die Informationen, die das bestimmte Gesichtsbild betreffen, in sozialen Medien bekanntgemacht werden, oder eine Verknüpfung, die, wenn sie angewählt wird, bewirkt, dass die Informationen, die das bestimmte Gesichtsbild betreffen, per E-Mail gesendet werden.

6. Verfahren nach einem der Ansprüche 1 bis 5, wobei Analysieren der Mediendaten Folgendes umfasst:
Anwenden von Audio-Fingerprinting auf die Mediendaten, um eine oder mehrere Tonstrukturen zu identifizieren;
Abfragen einer oder mehrerer Datenquellen, um die eine oder die mehreren Tonstrukturen mit einem oder mehreren Audioinhaltselementen abzugleichen;
Identifizieren, für jedes Audioinhaltselement des einen oder der mehreren Audioinhaltselemente, eines oder mehrerer Inhaltselemente, die dem Audioinhaltselement zugeordnet sind.

7. Verfahren nach Anspruch 6, wobei mindestens eine der einen oder der mehreren Datenquellen extern von dem Steuercomputer ist.

8. Verfahren nach Anspruch 6, wobei jedes Audioinhaltselement des einen oder der mehreren Audioinhaltselemente ein Name eines Musikstücks, eine Vorgeschichte des Musikstücks, ein Album des Musikstücks oder eine Verknüpfung zu einem Dienst ist, von dem das Musikstück erhalten werden kann.

9. Verfahren nach einem der Ansprüche 1 bis 8, wobei Analysieren der Mediendaten Folgendes umfasst:
Anwenden von Bild-Fingerprinting auf die Mediendaten, um eine oder mehrere Strukturen zu identifizieren, die Abschnitte von Bildern in den Mediendaten repräsentieren;
Abfragen einer oder mehrerer Datenquellen, um die eine oder die mehreren Strukturen mit Orten oder Dingen abzugleichen, die in dem bestimmten Medienelement angezeigt werden;
Identifizieren eines oder mehrerer Inhaltselemente auf der Grundlage der Orte oder der Dinge, die mit der einen oder den mehreren Strukturen übereinstimmen.

10. Verfahren nach Anspruch 9, wobei das eine oder die mehreren Inhaltselemente mindestens eines der folgenden Elemente umfassen: Wahrzeichen eines Orts, Bildmaterial des Orts, Geschichte des Orts, Landkartendaten, die eine Position des Orts angeben, Reiseinformationen für den Ort, ein oder mehrere Bilder von Lebensmitteln, die in dem bestimmten Medienelement angezeigt werden, geschichtliche Informationen des Lebensmittels, statistische Daten von Fahrzeugen, die in dem bestimmten Medienelement angezeigt werden, Bilder eines Produkts, das in dem bestimmten Medienelement angezeigt wird, Logos, die dem Produkt zugeordnet sind, ein Preis des Produkts, Materialien des Produkts, eine Zusammenfassung des Produkts, eine Herstellung des Produkts, eine Geschichte des Produkts, eine Verknüpfung, die, wenn sie angewählt wird, bewirkt, dass Informationen, die ein Element betreffen, als Nachricht gesendet werden, eine Verknüpfung, die, wenn sie angewählt wird, bewirkt, dass Informationen, die ein Element betreffen, in sozialen Medien bekanntgemacht werden, oder eine Verknüpfung, die, wenn sie angewählt wird, bewirkt, dass Informationen, die das Element betreffen, per E-Mail gesendet werden.

11. Nichtflüchtiges computerlesbares Speichermedium (610), das einen oder mehrere Befehle speichert, die, wenn sie durch einen oder mehrere Prozessoren ausgeführt werden, bewirken, dass der eine oder die mehreren Prozessoren das Verfahren nach einem der vorhergehenden Ansprüche durchführen.

12. System (600), Folgendes umfassend:
einen Steuercomputer (106);
einen Mediensteuerungscomputer (122); und
einen zweiten Bildschirmcomputer (130), der kommunikativ mit dem Mediensteuerungscomputer gekoppelt ist;
wobei der Steuercomputer eingerichtet ist, um:
Mediendaten für ein bestimmtes Medienelement (104) zu empfangen;
die Mediendaten zu analysieren, um ein oder mehrere Inhaltselemente zu identifizieren, die das bestimmte Medienelement betreffen, wobei jedes Inhaltselement des einen oder der mehreren Inhaltselemente einer jeweiligen Zeitposition in dem bestimmten Medienelement zugeordnet ist, wobei das eine oder die mehreren Inhaltselemente Metadaten repräsentieren, die dem bestimmten Medienelement zugeordnet sind;
der Mediensteuerungscomputer eingerichtet ist, um eine Anfrage nach dem bestimmten Medienelement an den Steuercomputer zu senden,
wobei der Steuercomputer eingerichtet ist, um die Anfrage nach dem bestimmten Medienelement zu empfangen und, als Reaktion auf Empfangen der Anfrage nach dem bestimmten Medienelement, das bestimmte Medienelement an den Mediensteuerungscomputer zu liefern, wobei der Mediensteuerungscomputer eingerichtet ist, um eine Wiedergabe des bestimmten Medienelements zu bewirken und eine Angabe, dass eine Wiedergabe des bestimmten Medienelements begonnen hat, an den zweiten Bildschirmcomputer zu senden;
der zweite Bildschirmcomputer eingerichtet ist, um eine Anfrage nach den Metadaten an den Steuercomputer zu senden, die dem bestimmten Medienelement zugeordnet sind;
der Steuercomputer eingerichtet ist, um die Anfrage nach den Metadaten, die dem bestimmten Medienelement zugeordnet sind, zu empfangen und mindestens einen Abschnitt des einen oder der mehreren Inhaltselemente und die jeweilige Zeitposition, die jedem Inhaltselement des Abschnitts des einen oder der mehreren Inhaltselemente zugeordnet ist, an den zweiten Bildschirmcomputer zu senden,
wobei der Mediensteuerungscomputer eingerichtet ist, um eine aktuelle Abspielkopfposition in der Wiedergabe des bestimmten Medienelements an den zweiten Bildschirmcomputer periodisch und automatisch zu senden,
wobei der zweite Bildschirmcomputer eingerichtet ist, um die aktuelle Abspielkopfposition in der Wiedergabe des bestimmten Medienelements aus dem Mediensteuerungscomputer zu empfangen und als Reaktion auf ein Bestimmen, dass die aktuelle Abspielkopfposition auf oder nahe der jeweiligen Zeitposition eines bestimmten Inhaltselements des Abschnitts des einen oder der mehreren Inhaltselemente ist, das bestimmte Inhaltselement anzuzeigen.

## Revendications

1. Procédé comprenant :
la réception, au niveau d'un ordinateur de contrôle (106), de données multimédias pour un élément multimédia particulier (104) ;
l'analyse, par l'ordinateur de contrôle, des données multimédias pour identifier un ou plusieurs éléments de contenu associés à l'élément multimédia particulier, chaque élément de contenu parmi le ou les éléments de contenu étant associé à une position temporelle respective dans l'élément multimédia particulier, le ou les éléments de contenu représentant des métadonnées associées à l'élément multimédia particulier ;
l'envoi, depuis un ordinateur faisant contrôleur multimédia (122) à l'ordinateur de contrôle, d'une requête pour l'élément multimédia particulier ;
la réception, au niveau de l'ordinateur de contrôle, de la requête pour l'élément multimédia particulier ;
en réponse à la réception de la requête pour l'élément multimédia particulier, l'induction, par l'ordinateur de contrôle, de la délivrance de l'élément multimédia particulier à l'ordinateur faisant contrôleur multimédia, l'ordinateur faisant contrôleur multimédia étant configuré pour induire la lecture de l'élément multimédia particulier et envoyer une indication selon laquelle la lecture de l'élément multimédia particulier a commencé à un ordinateur faisant deuxième écran (130) qui est couplé de façon communicante à l'ordinateur faisant contrôleur multimédia ;
l'envoi, par l'ordinateur faisant deuxième écran à l'ordinateur de contrôle, d'une requête pour les métadonnées associées à l'élément multimédia particulier ;
la réception, au niveau de l'ordinateur de contrôle, de la requête pour les métadonnées associées à l'élément multimédia particulier ;
l'envoi, par l'ordinateur de contrôle à l'ordinateur faisant deuxième écran, d'au moins une partie du ou des éléments de contenu et de la position temporelle respective associée à chaque élément de contenu de la partie du ou des éléments de contenu ;
l'envoi, par l'ordinateur faisant contrôleur multimédia, périodiquement et automatiquement, à l'ordinateur faisant deuxième écran, d'une position courante de tête de lecture à l'intérieur de la lecture de l'élément multimédia particulier ;
la réception, au niveau de l'ordinateur faisant deuxième écran, de la position courante de tête de lecture à l'intérieur de la lecture de l'élément multimédia particulier en provenance de l'ordinateur faisant contrôleur multimédia, et en réponse à la détermination que la position courante de tête de lecture est à ou près de la position temporelle respective d'un élément de contenu particulier de la partie du ou des éléments de contenu, l'affichage de l'élément de contenu particulier.

2. Procédé de la revendication 1, dans lequel les données multimédias pour l'élément multimédia particulier en comportent une ou plusieurs parmi : des données vidéo, des données audio, des données de sous-titres, ou des données de fond d'image.

3. Procédé de la revendication 1 ou la revendication 2, dans lequel l'ordinateur faisant deuxième écran est un dispositif informatique mobile et l'ordinateur faisant contrôleur multimédia est configuré pour contrôler la diffusion en continu de l'élément de contenu sur un dispositif d'affichage à grand écran.

4. Procédé de l'une quelconque des revendications précédentes, dans lequel l'analyse des données multimédias comprend :
l'application d'un processus de reconnaissance faciale aux données multimédias pour identifier une ou plusieurs images faciales affichées dans l'élément multimédia particulier ;
la comparaison, pour chaque image faciale parmi la ou les images faciales, de l'image faciale à une banque d'images faciales stockées pour identifier une image faciale stockée particulière qui correspond à l'image faciale ;
l'identification, pour chaque image faciale parmi la ou les images faciales, d'un ou plusieurs éléments de contenu associés à l'image faciale particulière qui correspond à l'image faciale.

5. Procédé de la revendication 4, dans lequel le ou les éléments de contenu associés à l'image faciale particulière en comportent un ou plusieurs parmi : une valeur de taille, une valeur de poids, des prix remportés, d'autres éléments multimédias, des informations biographiques, une date de naissance, un lien qui, lorsqu'il est sélectionné, induit l'envoi d'un message contenant des informations associées à l'image faciale particulière, un lien qui, lorsqu'il est sélectionné, induit le postage sur des médias sociaux des informations associées à l'image faciale particulière, ou un lien qui, lorsqu'il est sélectionné, induit l'envoi par courriel des informations associées à l'image faciale particulière.

6. Procédé de l'une quelconque des revendications 1 à 5, dans lequel l'analyse des données multimédias comprend :
l'application d'une identification audio par empreinte aux données multimédias pour identifier un ou plusieurs motifs de son ;
l'interrogation d'une ou plusieurs sources de données pour faire correspondre le ou les motifs de son à un ou plusieurs éléments de contenu audio ;
l'identification, pour chaque élément de contenu audio parmi le ou les éléments de contenu audio, d'un ou plusieurs éléments de contenu associés à l'élément de contenu audio.

7. Procédé de la revendication 6, dans lequel au moins une parmi la ou les sources de données est externe à l'ordinateur de contrôle.

8. Procédé de la revendication 6, dans lequel chaque élément de contenu audio parmi le ou les éléments de contenu audio est un nom d'une chanson, une histoire de la chanson, un album de la chanson, ou un lien vers un service depuis lequel la chanson peut être obtenue.

9. Procédé de l'une quelconque des revendications 1 à 8, dans lequel l'analyse des données multimédias comprend :
l'application d'une identification d'image par empreinte aux données multimédias pour identifier un ou plusieurs motifs représentant des parties d'images dans les données multimédias ;
l'interrogation d'une ou plusieurs sources de données pour faire correspondre le ou les motifs à des lieux ou choses affichés dans l'élément multimédia particulier ;
l'identification d'un ou plusieurs éléments de contenu sur la base des lieux ou choses correspondant au(x) motif (s).

10. Procédé de la revendication 9, dans lequel le ou les éléments de contenu en comportent un ou plusieurs parmi : des points de repère d'un lieu, une imagerie du lieu, une histoire du lieu, des données cartographiques indiquant un emplacement du lieu, des informations de voyage pour le lieu, une ou plusieurs images d'un aliment affiché dans l'élément multimédia particulier, des informations historiques de l'aliment, des données statistiques de véhicules affichés dans l'élément multimédia particulier, des images d'un produit affiché dans l'élément multimédia particulier, des logos associés au produit, un prix du produit, des matériaux du produit, un résumé du produit, une marque du produit, une histoire du produit, un lien qui, lorsqu'il est sectionné, induit l'envoi par message d'informations associées à un élément, un lien qui, lorsqu'il est sectionné, induit le postage sur des médias sociaux d'informations associées à un élément, ou un lien qui, lorsqu'il est sélectionné, induit l'envoi par courriel d'informations associées à l'élément.

11. Support de stockage non transitoire lisible par ordinateur (610) stockant une ou plusieurs instructions qui, lorsqu'elles sont exécutées par un ou plusieurs processeurs, conduisent le ou les processeurs à effectuer le procédé de l'une quelconque des revendications précédentes.

12. Système (600) comprenant :
un ordinateur de contrôle (106) ;
un ordinateur faisant contrôleur multimédia (122) ; et
un ordinateur faisant deuxième écran (130) couplé de façon communicante à l'ordinateur faisant contrôleur multimédia ;
dans lequel l'ordinateur de contrôle est configuré pour :
recevoir des données multimédias pour un élément multimédia particulier (104) ;
analyser les données multimédias pour identifier un ou plusieurs éléments de contenu associés à l'élément multimédia particulier, chaque élément de contenu parmi le ou les éléments de contenu étant associé à une position temporelle respective dans l'élément multimédia particulier, le ou les éléments de contenu représentant des métadonnées associées à l'élément multimédia particulier ;
l'ordinateur faisant contrôleur multimédia est configuré pour envoyer, à l'ordinateur de contrôle, une requête pour l'élément multimédia particulier,
l'ordinateur de contrôle étant configuré pour recevoir la requête pour l'élément multimédia particulier et, en réponse à la réception de la requête pour l'élément multimédia particulier, délivrer l'élément multimédia particulier à l'ordinateur faisant contrôleur multimédia, l'ordinateur faisant contrôleur multimédia étant configuré pour induire la lecture de l'élément multimédia particulier et envoyer une indication selon laquelle la lecture de l'élément multimédia particulier a commencé à l'ordinateur faisant deuxième écran ;
l'ordinateur faisant deuxième écran est configuré pour envoyer, à l'ordinateur de contrôle, une requête pour les métadonnées associées à l'élément multimédia particulier ;
l'ordinateur de contrôle est configuré pour recevoir la requête pour les métadonnées associées à l'élément multimédia particulier, et envoyer, à l'ordinateur faisant deuxième écran, au moins une partie du ou des éléments de contenu et la position temporelle respective associée à chaque élément de contenu de la partie du ou des éléments de contenu,
l'ordinateur faisant contrôleur multimédia étant configuré pour envoyer, périodiquement et automatiquement, à l'ordinateur faisant deuxième écran, une position courante de tête de lecture à l'intérieur de la lecture de l'élément multimédia particulier,
l'ordinateur faisant deuxième écran étant configuré pour recevoir la position courante de tête de lecture à l'intérieur de la lecture de l'élément multimédia particulier en provenance de l'ordinateur faisant contrôleur multimédia, et en réponse à la détermination que la position courante de tête de lecture est à ou près de la position temporelle respective d'un élément de contenu particulier de la partie du ou des éléments de contenu, afficher l'élément de contenu particulier.
